# EUROPEAN PATENT APPLICATION

(11) **EP 4 523 579 A1**
(43) Date of publication of application: **19.03.2025**
(21) Application number: 23822627.8
(22) Date of filing: 31.01.2023
(51) Int. Cl.: A47J 36/00

(54) **MULTIFUNCTIONAL CHEF KITCHEN MACHINE, FEEDING DEVICE THEREOF AND FEEDING METHOD THEREFOR**

(30) Priority: 15.06.2022 CN 202210681882
(71) Applicant: Zhejiang Kitchen Idea Technology Co., Ltd., Hangzhou, Zhejiang 310052 (CN)
(72) Inventor: FANG, Zhihua, Hangzhou, Zhejiang 310052 (CN); LI, Chao, Hangzhou, Zhejiang 310052 (CN)
(74) Representative: Murgitroyd & Company
(86) International application number: PCT/CN2023/073920
(87) International publication number: WO 2023/241055

(57) **Abstract**

A functional chef kitchen machine, a feeding device thereof and a feeding method therefor. The feeding device comprises a first assembly and a second assembly rotationally connected to the first assembly; a plurality of ingredient storage bins (81', 81") are disposed along a circumference of the second assembly; bottoms of the ingredient storage bins (81', 81") are provided with openings; the first assembly is provided with a discharge port (21, 21'); and when the second assembly rotates on the first assembly, the openings at lower ends of the plurality of ingredient storage bins (81', 81") are sequentially communicated with the discharge port (21, 21'). By placing different food materials into the different ingredient storage bins (81', 81"), when the second assembly rotates, the different food materials can be sequentially fed from the discharge port (21, 21'). Accordingly, different food materials can be fed by stages.

## Description

### TECHNICAL FIELD

The present disclosure further relates to the field of electric cooking tools, in particular, to a multifunctional chef kitchen machine, a feeding device and a feeding method thereof.

### BACKGROUND

People have a deeper pursuit of food. However, currently, food production generally relies on the cooking experience of the chef, such as duration and degree of heating, ingredients, cooking time, and other factors, which makes it difficult to form a standard of cooking and is not conducive to large-scale social production.

CN201610348656 discloses a remote intelligent control method of a food processor. In the method, after selecting parameter information of a certain recipe from the cloud server by an intelligent device, the parameters are sent to the food processor via wireless signal by the cloud server. After the wireless communication module of the food processor receives the signal, a controller controls a related machine to work according to the set parameters. The user can process the food without the need for on-site operation, relying solely on the cooking parameters. The method provides technical support to effectively replicate a cooking process of an experienced chef.

When cooking food, experienced chefs generally control the duration and degree of heating by controlling the temperature of the cooking vessel, controlling the heat, timing of the ingredients, and stirring of the ingredients. Thus, replicating the cooking process of the experienced chef should be achieved from the temperature control of the cooking vessel, the control of the duration and degree of heating, the feeding of the ingredients and the stirring of the ingredients. Most multifunctional chef machines in the related art have functions such as temperature control, control of duration and degree of heating and ingredient stirring. In order to better replicate the cooking process of the experienced chef, it is necessary to develop a feeding device having the function of automatically feeding ingredients.

### SUMMARY

An object of the present disclosure is to provide a feeding device having a function of automatically feeding ingredients.

A feeding device which includes a first assembly and a second assembly rotatably connected to the first assembly. A plurality of ingredient storage bins are disposed along a circumference of the second assembly, openings are provided at lower ends of the plurality of ingredient storage bins, and the first assembly is provided with a discharge port. When the second assembly rotates on the first assembly, the plurality of ingredient storage bins are in communication with the discharge port sequentially.

The present disclosure has following advantages: by placing different ingredients into different ingredient storage bins, the different ingredients can be sequentially fed from the discharge port when the second assembly rotates. Thus, the different ingredients can be fed in stages. In addition, the different ingredients can be fed in stages merely by rotating the second assembly, and the integral structure of the feeding device is simple and logical.

In some embodiments, the first assembly includes an upper housing, a lower housing and a baseboard, the baseboard is detachably and rotatably connected to a bottom of the second assembly, the baseboard is provided with a first discharge hole corresponding to the discharge port; a concave region is defined by an upper surface of the upper housing depressing and configured for accommodating the baseboard, the baseboard is detachably assembled in the concave region, and the lower housing is fixed below the upper housing.

The embodiments described above have following advantages: when the ingredients are put into the plurality of ingredient storage bins, the second assembly and the baseboard can be taken out from the concave region together, and the baseboard can prevent the ingredients from dropping off from the openings at lower ends of the plurality of storage bins.

In some embodiments, a restricting structure is disposed between the baseboard and the upper housing, and the restricting structure is configured for restricting rotation of the baseboard relative to the upper housing; the restricting structure includes a longitudinal restricting groove disposed on an inner surface of the concave region and a restricting plate disposed on the baseboard and fit with the longitudinal restricting groove; and when the baseboard is disposed in the concave region, the restricting plate is located in the longitudinal restricting groove and the discharge hole is located above the discharge port.

The embodiments described above have following advantages: when the second assembly rotates, rotation of the baseboard along with the second assembly caused by a force of friction can be prevented.

In some embodiments, a center of the baseboard is provided with a connecting hole; the second assembly includes a main body and a latching assembly fixed on a bottom of the main body, the plurality of ingredient storage bins are disposed on the main body, the latching assembly includes a tube-shaped structure extending downward from the bottom of the main body, the latching assembly includes a plurality of bolts, the plurality of bolts are controllably extended from a sidewall of the latching assembly, the latching assembly extends through the connecting hole and fits with the connecting hole, and when the plurality of bolts extend through the sidewall of the latching assembly, the plurality of bolts abuts against a lower surface of the baseboard and fits with the lower surface of the baseboard. The latching assembly is configured for making the baseboard be in tight contact with the second assembly, so as to prevent the ingredients from mixing before being fed or leaking from a slit between the second assembly and the baseboard caused by insufficient attaching between the second assembly and the baseboard. The tube-shaped structure is cylinder-shaped, and the connecting hole is a circular-shaped hole.

The embodiments described above have following advantages: the latching assembly is configured for making the baseboard be in tight contact with the second assembly, so as to prevent the ingredients from mixing before being fed or leaking from a slit between the second assembly and the baseboard caused by insufficient attaching between the second assembly and the baseboard.

In some embodiments, the latching assembly includes the tube-shaped structure, an end cap, a rotary knob, a cam and the plurality of bolts. The cam refers to any rotating part that is capable of driving the plurality of bolts to extend or retract when the cam rotates. The tube-shaped structure is fixed on a lower surface of the main body, the end cap is connected to a lower end of the tube-shaped structure, at least one of the lower surface of the main body and an upper surface of the end cap extends towards the other of the lower surface of the main body and the upper surface of the end cap and defines a rim, so that an assembling chamber is defined between the end cap and the lower surface of the main body; the cam is disposed in the assembling chamber and capable of rotating in the assembling chamber; an inner surface of the end cap or the lower surface of the main body is provided with a guide rail, the plurality of bolts are disposed on the guide rail and slidable on the guide rail; inner ends of the plurality of bolts abut against the cam, outer ends of the plurality of bolts extend out of the assembling chamber, the outer ends of the plurality of bolts extend out of the assembling chamber are provided with oblique planes, when the plurality of bolts extend out of the assembling chamber, the oblique planes abut against the lower surface of the baseboard and are configured for making the baseboard and the second assembly be tightened with each other; and the rotary knob is rotatably connected to the end cap, an upper end of the rotary knob is coaxially fixed on the cam, and the lower end of the rotary knob extends out of the assembling chamber.

The embodiments described above have following advantages: the cam is driven to rotate by rotation of the rotary knob, and the plurality of bolts are driven to extend out and abut against the lower surface of the baseboard by the cam, so that the baseboard and the second assembly are tightened with each other. The integral structure of the feeding device is simple, and it is convenient to use.

In some embodiments, the cam is provided with a plurality of inclined holes around a rotation center of the cam, the plurality of inclined holes are straight-shaped slot holes or curve-shaped slot holes, each of the plurality of inclined holes gradually extends out from the rotation center of the cam while rotationally extending along a circumference of the rotation center of the cam, a plurality of guide rods fitting with the inclined hole are disposed in the plurality of bolts, and the plurality of guide rods extend along a direction perpendicular to the plurality of bolts, and the plurality of guide rods are disposed in the inclined holes and slidable in the inclined holes.

The embodiments described above have following advantages: when the cam rotates, the guide rod is driven by both the inclined hole and the guide rail to extend or retract. The integral structure of the feeding device is simple without a spring, and it is convenient to use.

In some embodiments, the first assembly is provided with a driving assembly, the second assembly is driven by the driving assembly via a coupling assembly, the second assembly is driven by the driving assembly via a coupling assembly; a lower surface of the first assembly is provided with a driving assembly assembling region incurved upward; the driving assembly is disposed in the driving assembly assembling region; and a lower end of the coupling assembly is inserted into the driving assembly assembling region and is in transmission connection with the driving assembly. The driving assembly includes an electric box, a motor and a deceleration gear set; the electric box is fixed in the driving assembly assembling region; the motor is disposed in the electric box; and the deceleration gear set is driven by the motor, and the coupling assembly is driven by the deceleration gear set.

The embodiments described above have following advantages: the integral structure of the feeding device is simple and logical, and it is convenient to assemble and change the components of the feeding device.

In some embodiments, the first assembly includes an upper housing and a lower housing fixed below the upper housing, and a chamber is defined between the upper housing and the lower housing; the driving assembly includes an electric box, a motor, a deceleration gear set and a transmission gear set; the electric box is disposed in the driving assembly assembling region and fit with the driving assembly assembling region; the motor and the transmission gear set are disposed in the electric box; the transmission gear set is driven by the motor, the transmission gear set includes an output gear, the output gear extends out of the electric box; the deceleration gear set is disposed in a chamber defined by the lower housing and the upper housing, the deceleration gear set is in transmission connection with the output gear; and a lower end of the coupling assembly extends into the chamber, and is in transmission connection with the deceleration gear set. A sliding key configured for latching the electric box is connected in the chamber and slidable in the chamber, the sliding key includes an operating plate and a first latching plate; the lower housing is provided with a first hole and a second hole, the first hole is located at a side of the driving assembly assembling region, the first latching plate extends from the first hole to the driving assembly assembling region, the operating plate extends out from a bottom of the lower housing, a second latching plate protrudes out from an outer surface of the electric box, and the second latching plate is latched to an outer surface of the first latching plate and configured for latching the electric box and fixing the electric box in the driving assembly assembling region.

The embodiments described above have following advantages: the integral structure of the feeding device is simple and logical, and it is convenient to assemble and change the components of the feeding device. Since a larger space is provided for the deceleration gear set, it is suitable for assembling a deceleration gear set having a large torque.

In some embodiments, the feeding device includes a rotation recognition assembly. The rotation recognition assembly includes a transmission member, a contact switch and a plurality of contact protrusions corresponding to the plurality of ingredient storage bins; the plurality of contact protrusions are circumferentially fixed to the lower surface of the end cap; the contact switch is fixed on the first assembly; the transmission member is movably connected to the first assembly, the transmission member includes a second surface matching with the contact switch, and the transmission member includes a first surface matching with the contact protrusion.

The embodiments described above have following advantages: it is convenient for the contact switch to feed back an operation information to the control unit.

In some embodiments, lower ends of the plurality of ingredient storage bins are provided with a plurality of thin-wall bin ports extending downward, lower ends of the thin-wall bin ports are provided with a plurality of rubber rings; lower ends of the plurality of thin-wall bin ports are provided with a plurality of latching protrusions protruding outwards; an inner wall of each of the plurality of rubber rings are provided with a plurality of latching grooves fitting with the plurality of latching protrusions, and the plurality of latching protrusions are inserted into the plurality of latching grooves.

The embodiments described above have following advantages: the rubber ring can prevent mixing of the ingredients before being fed caused by leakage of the ingredients from a slit between the bottoms of the ingredient storage bins and the first assembly.

In some embodiments, outer surfaces of the plurality of thin-wall bin ports are provided with a plurality of abutting surfaces, and the plurality of abutting surfaces abut against top portions of the plurality of rubber rings.

The embodiments described above have following advantages: situations that the rubber ring is jacked up can be avoided.

In some embodiments, a part of a cross section of each of the plurality of rubber rings below each of the plurality of latching protrusions inclines inward along a direction from top to bottom and a thickness of the part of the cross section of each of the plurality of rubber rings below each of the plurality of latching protrusions gradually decreases along the direction from top to bottom.

The embodiments described above have following advantages: a slit between the bottom of the ingredient storage bin and the first assembly is sealed, and rolling up of the rubber ring under a force of friction of the first assembly can be avoided.

In some embodiments, a lower surface of the first assembly is provided with a driving assembly assembling region incurved upward, and the driving assembly is disposed in the driving assembly assembling region; and a lower end of the coupling assembly is inserted into the driving assembly assembling region and is in transmission connection with the driving assembly.

The embodiments described above have following advantages: the integral structure of the feeding device is simple, logical, and space-saving, and it is convenient to assemble the components of the feeding device.

In some embodiments, the driving assembly includes an electric box, a motor and a deceleration gear set; the electric box is fixed in the driving assembly assembling region; the motor is disposed in the electric box; and the deceleration gear set is driven by the motor, and the coupling assembly is driven by the deceleration gear set.

The embodiments described above have following advantages: it is convenient to lower a rotate speed of the second assembly and increase the torque, so as to assemble a motor having a less power. In addition, the feeding device operates smoothly, and the space and the cost are saved.

In some embodiments, at least one of the plurality of ingredient storage bins is provided with a restricting plate at the bottom, and the restricting plate is provided with a liquid outlet. The liquid outlet is a circular-shaped hole, and a cross sectional area of the liquid outlet is smaller than an area of the ingredient storage bin.

The embodiments described above have following advantages: since the liquid outlet is small and circular-shaped, it is easier to seal the liquid outlet, so that leakage of a liquid from a slit between the bottom of the ingredient storage bin and the first assembly is prevented.

In some embodiments, the plurality of ingredient storage bins includes a center ingredient storage bin and a plurality of peripheral ingredient storage bins disposed evenly around the center ingredient storage bin, the plurality of peripheral ingredient storage bins are a through hole-shaped structure extending through up and down, a bottom of the center ingredient storage bin is sealed, the center ingredient storage bin is in communication with at least one of the plurality of peripheral ingredient storage bins; and when the second assembly rotates on the first assembly, the plurality of peripheral ingredient storage bins sequentially pass above the discharge port.

The embodiments described above have following advantages: since a great amount of water is required in the process of cooking food, the center ingredient storage bin and the peripheral ingredient storage bin being in communication with the center ingredient storage bin are mainly configured for storing and feeding water, so as to feed water except for feeding the ingredients. An utility rate of space is high.

In some embodiments, the peripheral ingredient storage bin being in communication with the center ingredient storage bin is provided with a restricting plate at the bottom, and the restricting plate is provided with a water outlet. The water outlet is a circular-shaped hole, and a cross sectional area of the water outlet is smaller than an area of the ingredient storage bin. The peripheral ingredient storage bin being in communication with the center ingredient storage bin is provided with a restricting plate at the bottom, and the restricting plate is provided with a water outlet.

The embodiments described above have following advantages: since the water outlet is small and circular-shaped, it is easier to seal the water outlet, so that leakage of water from a slit between the bottom of the ingredient storage bin and the first assembly is prevented.

In some embodiments, the feeding device further includes a control unit, an interaction unit, a cloud server, a driving assembly configured for driving the second assembly to rotate, and a rotation recognition assembly configured for recognizing a rotation position of the second assembly; the control unit, the interaction unit and the cloud server are in electrical communication with each other, the control unit is in electrical connection with the driving assembly and the rotation recognition assembly, respectively; and the cloud server is configured for storing a database of recipe.

The embodiments described above have following advantages: web of things is realized, and it is convenient to share the recipe.

A feeding method of the feeding device described above includes following steps:
step S1, obtaining a choice of the recipe of a user with the interaction unit;
step S2, reminding the user to put an ingredient into a corresponding peripheral ingredient storage bin with the interaction unit, and reminding the user to put water into the center ingredient storage bin with the interaction unit;
step S3, the driving assembly driving the second assembly to rotate along a first direction for feeding a part of the ingredients under controlled by the control unit;
step S4, the driving assembly driving the second assembly to rotate along a second direction for feeding water under controlled by the control unit; and
step S5, controlling the driving assembly driving the second assembly to rotate along the first direction again for continuously feeding the ingredients with the control unit under controlled by the control unit.

The methods has following advantages: it is merely necessary for the user to select a recipe by the interaction unit, the feeding device will feed the ingredients according to a corresponding feeding parameter of the recipe. Water can be added at any time during the process of feeding the ingredients.

In some embodiments, after step S5, the method further includes a following step:
step S6, the driving assembly driving the second assembly to rotate along the second direction to feed water again with the control unit under controlled by the control unit.

The embodiments described above have following advantages: water can be added from both sides or for multiple times.

In some embodiments, each time the second assembly rotates to a position that an opening at a lower end of one of the plurality of ingredients storage bins is in communication with an upper end of the discharge port, the rotation recognition assembly is capable of sending a feedback signal to the control unit, and the control unit is capable of estimating a cooking process according to the feedback signal.

The embodiments described above have following advantages: the control unit is capable of recognizing a feeding process, and the feedback signal make the controlling of the control unit more accurately.

In some embodiments, each time the second assembly rotates to a position that an opening at a lower end of one of the plurality of ingredients storage bins is in communication with an upper end of the discharge port, the rotation recognition assembly is capable of sending a feedback signal to the control unit, and the control unit is capable of sending a braking command to the driving assembly.

The embodiments described above have following advantages: after the driving assembly is braked, it is more convenient to feed the ingredients; in addition, in a process of feeding the liquid, it is more convenient to calculate a feeding amount of the liquid according to a time that the opening at the lower end of one of the plurality of ingredients storage bins is in communication with the upper end of the discharge port.

A feeding method of the feeding device described above is further provided, which includes following steps:
step S1, the second assembly rotating along a first direction for feeding a part of the ingredients;
step S2, the second assembly rotating along a second direction for feeding water; and
step S3, the second assembly rotating along the first direction again for feeding the other part of the ingredients.

The present method has following advantages: water can be added at any time in the process of feeding ingredients.

A multifunctional chef kitchen machine is provided in the present disclosure, which includes a cooking vessel and a heating unit configured for heating the cooking vessel, wherein an opening of the cooking vessel is detachably connected to the feeding device described above. A lower surface of the second assembly is incurved to define a gum ring assembling region, a sealing assembly is disposed in the gum ring assembling region, the sealing assembly extends downwards, fits with an opening of the cooking vessel and is inserted into the cooking vessel through the opening of the cooking vessel.

The multifunctional chef kitchen machine has following advantages: the multifunctional chef kitchen machine has a function of feeding ingredients, and an integral connection structure of the multifunctional chef kitchen machine well-matched.

In some embodiments, the gum ring assembling region is provided with a fixed hook and a movable hook, the fixed hook and the movable hook are circumferentially disposed, so that the sealing assembly is latched in the gum ring assembling region; the lower housing is provided with a first hole and a second hole, the movable hook is disposed in the lower housing and slidable in the lower housing, and the movable hook is elastically connected to the lower housing; the movable hook is provided with a pushing plate and a hook plate, the pushing plate extends downwards from the second hole, and the hook plate extends downwards from the first hole; and the hook plate and the fixed hook are circumferentially disposed.

The embodiments described above have following advantages: the user can make the hook plate no longer latched to the sealing assembly by sliding the pushing plate, and it is more convenient to disassemble and wash the multifunctional chef kitchen machine.

In some embodiments, the sealing assembly includes a connecting ring and a circular-shaped gum ring detachably disposed on the connecting ring, the connecting ring is provided with a latching surface fitting with a fixed hook and a movable hook, and the movable hook and the fixed hook are latched to the latching surface.

The embodiments described above have following advantages: the integral structure of the multifunctional chef kitchen machine is simple and logical, and it is convenient to produce and assemble the multifunctional chef kitchen machine.

In some embodiments, an outer surface of the cooking vessel is provided with a hollow handle, an upper end of the hollow handle is fixed to a first end of an electric connector, the first assembly is fixed to a second end of the electric connector being electrically connected to the driving assembly; and when the feeding device is disposed on the cooking vessel, the first end of the electric connector is in electrical communication with the second end of the electric connector.

The embodiments described above have following advantages: it is convenient to supply power to the feeding device.

In some embodiments, the second end of the electric connector includes a latch horizontally extending around a circumference of the sealing assembly, the first end of the electric connector includes a socket fitting with the latch; and the second end of the electric connector is fixed to a lower end of the electric box.

The embodiments described above have following advantages: in a process of assembling the feeding device, the first end of the electric connector and the second end of the electric connector are staggered firstly and assembled on the cooking vessel, the first end of the electric connector is connected to the second end of the electric connector by means of rotating, so as to save the space.

### BRIEF DESCRIPTION OF THE DRAWINGS

FIG. 1 is a stereo schematic diagram of an integral structure of a multifunctional chef kitchen machine in first embodiment of the present disclosure.
FIG. 2 is a stereo schematic diagram of a feeding device in first embodiment of the present disclosure.
FIG. 3 is a stereo schematic diagram of a cooking vessel in first embodiment of the present disclosure.
FIG. 4 is an explosive view of a feeding device in first embodiment of the present disclosure.
FIG. 5 is a stereo schematic diagram of a first assembly in first embodiment of the present disclosure.
FIG. 6 is an explosive view of a first assembly in first embodiment of the present disclosure with an inclined angle.
FIG. 7 is an explosive view of a first assembly in first embodiment of the present disclosure with an inclined angle.
FIG. 8 is a stereo schematic diagram of a first assembly in the first embodiment of the present disclosure, in which a lower housing, an electric box and components in the electric box are not shown.
FIG. 9 is a stereo schematic diagram of a lower housing with an inclined angle, in which an electric box and components of the electric box have been assembled.
FIG. 10 is a structural schematic diagram of a lower surface of a lower housing in first embodiment of the present disclosure.
FIG. 11 is a schematic diagram showing a connection between an electric box and a rotation recognition assembly in first embodiment of the present disclosure.
FIG. 12 is an explosive view of a feeding device exploded from a sealing assembly in first embodiment of the present disclosure.
FIG. 13 is an explosive view of a second assembly in first embodiment of the present disclosure with an inclined angle.
FIG. 14 is an explosive view of a second assembly in first embodiment of the present disclosure with an inclined angle.
FIG. 15 is a sectional view of a lower end of a thin-wall bin port in first embodiment of the present disclosure, in which a rubber ring is sleeved on the lower end of the thin-wall bin port.
FIG. 16 is an explosive view of a feeding device in second embodiment of the present disclosure with an inclined angle.
FIG. 17 is an explosive view of a feeding device in second embodiment of the present disclosure, in which a second assembly and a baseboard are horizontally removed from a concave region.
FIG. 18 is an explosive view of a feeding device exploded from a sealing assembly in second embodiment of the present disclosure.
FIG. 19 is a stereo schematic diagram of a first assembly in second embodiment of the present disclosure.
FIG. 20 is an explosive view of a first assembly in second embodiment of the present disclosure.
FIG. 21 is stereo schematic diagram of an assembly of a lower housing and a driving assembly with an inclined angle.
FIG. 22 is a structural schematic diagram of structures inside the electric box in second embodiment of the present disclosure.
FIG. 23 is a stereo schematic diagram of a second assembly in second embodiment of the present disclosure.
FIG. 24 is a stereo schematic diagram of a second assembly in second embodiment of the present disclosure with an inclined angle.
FIG. 25 is a stereo schematic diagram of a second assembly in second embodiment of the present disclosure with an inclined angle.
FIG. 26 is a stereo schematic diagram of a second assembly in third embodiment of the present disclosure with an inclined angle.
FIG. 27 is a stereo schematic diagram of a second assembly in third embodiment of the present disclosure with an inclined angle.

In the figures,
01 represents a cooking vessel; 02 represents a feeding device; 2 represents an upper housing; 3 represents a lower housing; 4 represents a baseboard; 7 represents a sealing assembly; 8 represents a main body; 9 represents a latching assembly; 21 represents a discharge port; 41 represents a discharge hole; 42 represents a restricting plate; 43 represents a connecting hole; 51 represents an electric box; 52 represents a motor; 53 represents a deceleration gear set; 54 represents a second end of the electric connector; 55 represents a transmission gear set; 56 represents an output gear; 57 represents a first gear sleeve; 58 represents a connecting gear; 61 represents a first transmission member; 62 represents a contact switch; 63 represents a pushing rod; 65 represents a reset spring; 64 represents a second transmission member; 71 represents a connecting ring; 72 represents a circular-shaped gum ring; 73 represents a bottom cap; 91 represents a tube-shaped structure; 92 represents a bolt; 93 represents an end cap; 94 represents a rotary knob; 95 represents a cam; 100 represents a chamber; 111 represents a hollow handle; 112 represents a first end of the electric connector; 121 represents a socket; 200 represents a concave region; 201 represents a longitudinal restricting groove; 202 represents a restricting protrusion; 211 represents a first outlet hole; 212 represents a tube-shaped structure; 300 represents a gum ring assembling region; 301 represents a first hole; 302 represents a second hole; 310 represents a driving assembly assembling region; 311 represents a second outlet hole; 401 represents a restricting notch; 511 represents a sliding key; 512 represents a second latching plate; 531 represents a second gear sleeve; 541 represents a latch; 721 represents a connecting portion; 722 represents a sealing portion; 732 represents a fastener; 811 represents a thin-wall bin port; 812 represents a rubber ring; 813 represents a center ingredient storage bin; 814 represents a peripheral ingredient storage bin; 900 represents an assembling chamber; 921 represents a guide rod; 931 represents a contact protrusion; 951 represents an inclined hole; 5111 represents an operating plate; 5112 represents a first latching plate; 8111 represents a latching protrusion; 8112 represents a restricting surface; 8121 represents a latching groove.
2' represents an upper housing; 3' represents a lower housing; 4' represents a baseboard; 7' represents a sealing assembly; 8' represents a main body; 9' represents a latching assembly; 21' represents a discharge port; 34' represents a fixed hook; 35' represents a movable hook; 41' represents a first discharge hole; 42' represents a restricting plate; 43' represents a connecting hole; 51' represents an electric box; 52' represents a motor; 53' represents a deceleration gear set; 57' represents a gear sleeve; 58' represents a connecting gear; 71' represents a connecting ring; 72' represents a circular-shaped gum ring; 73' represents a latching cap; 81' represents an ingredient storage bin; 91' represents a tube-shaped structure; 92' represents a bolt; 93' represents an end cap; 94' represents a rotary knob; 95' represents a cam; 96' represents a guide rail; 100' represents a chamber; 200' represents a concave region; 201' represents a restricting groove; 210' represents an end cap; 211' represents a first outlet hole; 300' represents a gum ring assembling region; 310' represents a driving assembly assembling region; 311' represents a second outlet hole; 352' represents a hook plate; 351' represents a pushing plate; 900' represents an assembling chamber; 921' represents a guide rod; 951' represents an inclined hole;
81" represents an ingredient storage bin"; 811" represents a restricting plate"; and 812" represents a water outlet.

### DETAILED DESCRIPTION

The present disclosure will be further described in conjunction with embodiments hereinafter.

### First embodiment

The present disclosure provides a multifunctional chef kitchen machine, which includes a cooking vessel 01, a heating unit configured for heating the cooking vessel, a stirring unit configured for stirring ingredients in the cooking vessel 01, a control unit, an interaction unit and a cloud server. The control unit, the interaction unit and the cloud server are in electrical communication with each other. The cloud server is configured for storing a database of recipe.

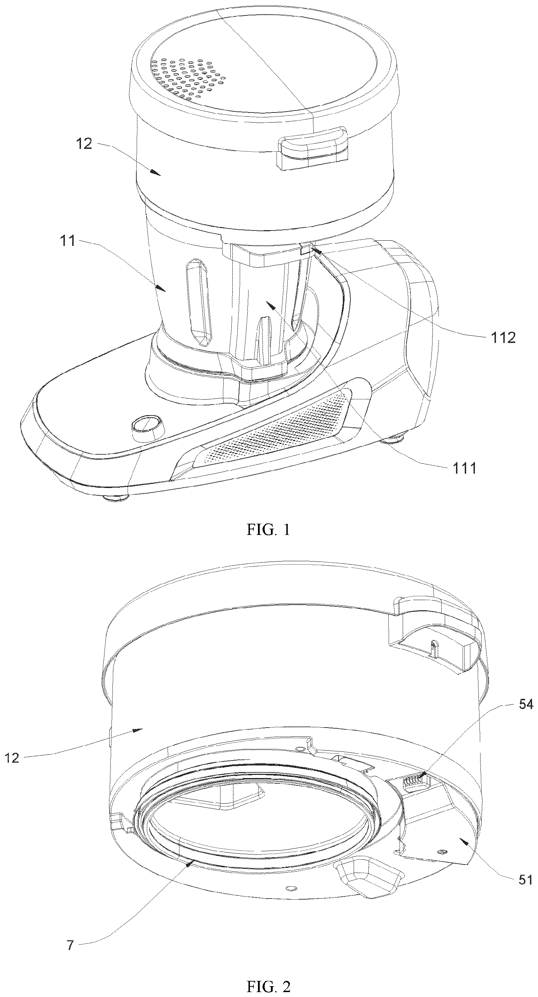

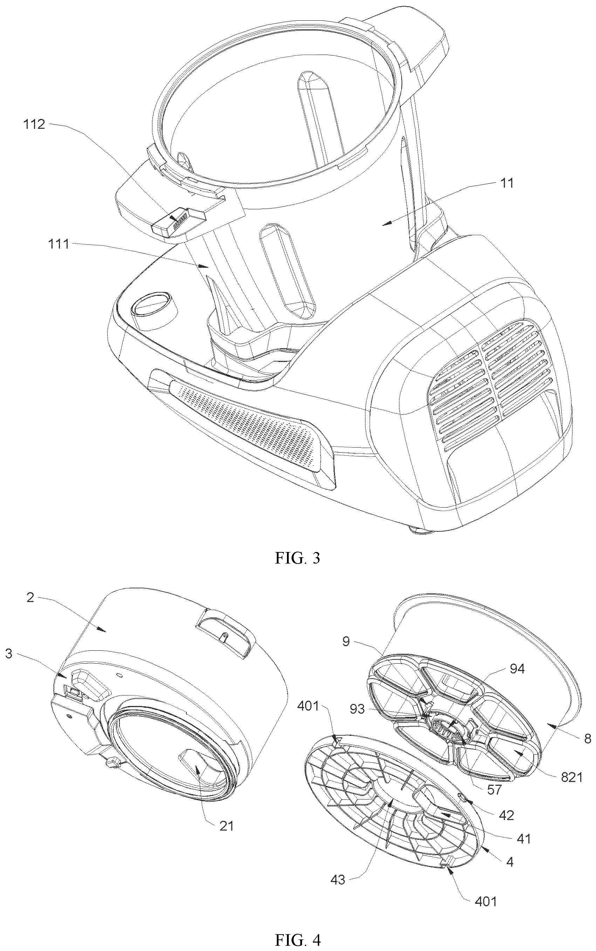

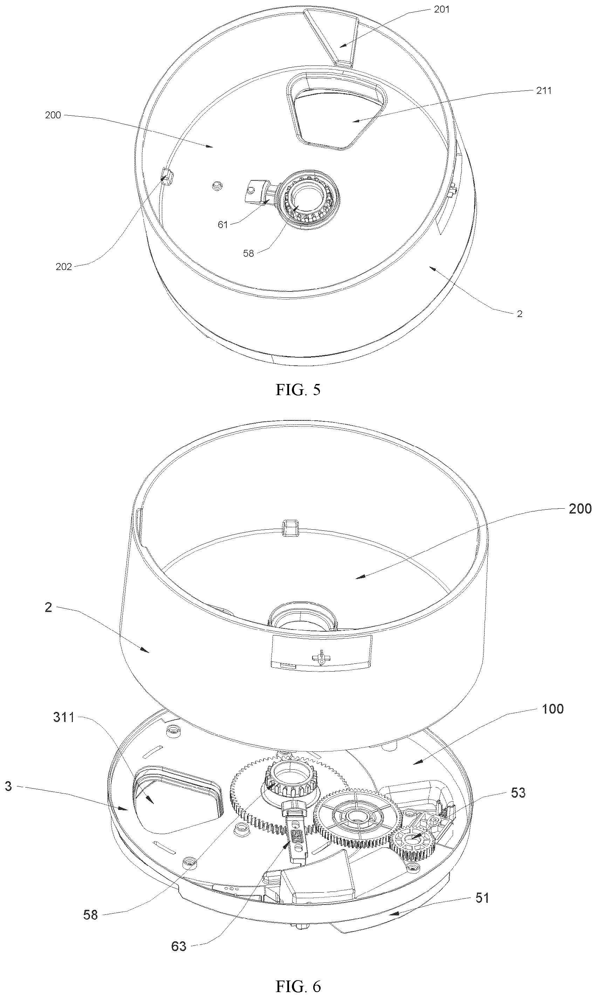

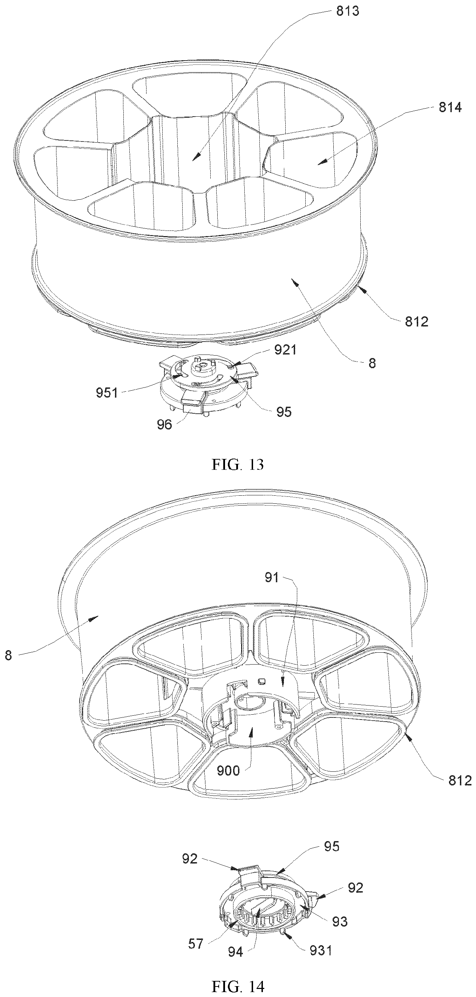

Referring to FIG. 1, an opening of the cooking vessel 01 is detachably connected to the feeding device 02. Referring to FIG. 4, the feeding device 02 includes a first assembly and a second assembly rotatably connected to the first assembly. Referring to FIG. 4 and FIG. 6, the first assembly includes an upper housing 2, a lower housing 3, a baseboard 4, a driving assembly, a rotation recognition assembly and a sealing assembly 7. Referring to FIG. 13, the second assembly includes a main body 8 and a latching assembly 9. The second assembly is driven by the driving assembly via a coupling assembly.

Referring to FIG. 2 and FIG. 3, an outer surface of the cooking vessel 01 is provided with a hollow handle 111, an upper end of the hollow handle 111 is fixed to a first end 112 of an electric connector. When the feeding device is disposed on the cooking vessel 01, the first end 112 of the electric connector is in electrical communication with the second end 54 of the electric connector, so as to facilitate supplying power to the feeding device.

Referring to FIG. 5, a concave region 200 is defined by an upper surface of the upper housing 2 depressing and configured for accommodating the baseboard 4. The upper housing 2 is provided with a first outlet hole 211 and an axle hole.

Referring to FIG. 4 and FIG. 5, a restricting structure is disposed between the baseboard 4 and the upper housing 2, and the restricting structure is configured for restricting rotation of the baseboard 4 relative to the upper housing 2; the restricting structure includes a longitudinal restricting groove 201 disposed on an inner surface of the concave region 200 and a restricting plate 42 disposed on the baseboard 4 and fit with the longitudinal restricting groove 201; and when the baseboard 4 is disposed in the concave region 200, the restricting plate 42 slides into a bottom of the longitudinal restricting groove 201 along the longitudinal restricting groove201, and the discharge hole 41 is located right above the discharge port 21. The longitudinal restricting groove 201 is a V-shaped groove longitudinally disposed, and is capable of preventing the baseboard 4 from rotating along with the second assembly under the action of a force of friction while the second assembly rotating. A center of the baseboard 4 is provided with a connecting hole 43 configured for being connected to the latching assembly 9. A restricting protrusion 202 is disposed inside the concave region 200, and the baseboard 4 is further provided with a restricting notch 401. The restricting notch 401 fits with the restricting protrusion 202, and configured for accurate location of the restricting plate 42 after the restricting plate 42 slides to the bottom of the longitudinal restricting groove 201 along the longitudinal restricting groove 201.

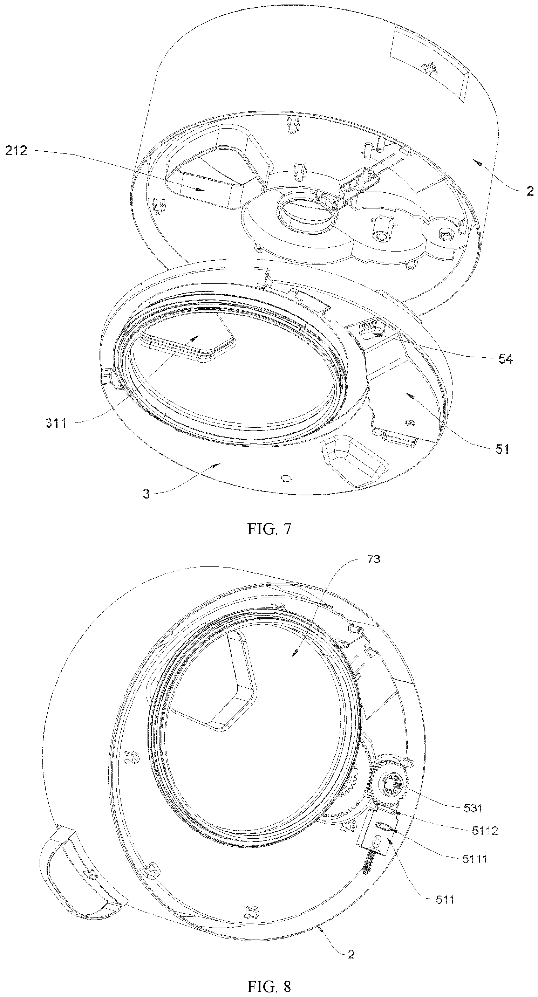

Referring to FIG. 6 and FIG. 7, the lower housing 3 is fixed below the upper housing 2, and a chamber 100 is defined between the upper housing 2 and the lower housing 3. A lower surface of the lower housing 3 is provided with a gum ring assembling region 300. A lower surface of the lower housing 3 is provided with a driving assembly assembling region 310 incurved upward. The lower housing 3 is provided with a second outlet hole 311, the second outlet hole 311 is located in the gum ring assembling region 300; at least one of the second outlet hole 311 and the first outlet hole 211 extends towards the other one of the second outlet hole 311 and the first outlet hole 211 and defines a tube-shaped structure 212, and the second outlet hole 311, the first outlet hole 211 and the tube-shaped structure 212 define a discharge port 21. In addition, the discharge port 21 and the chamber 100 are sealed.

Referring to FIG. 4, the baseboard 4 is detachably connected to a bottom of the second assembly and configured for sealing an opening at a lower end of the peripheral ingredient storage bin 814. In operation, the baseboard 4 and the second assembly are detachably assembled in the concave region 200. The baseboard 4 is provided with a discharge hole 41 directly opposite to the discharge port 21. When the ingredients are put into the plurality of ingredient storage bins, the second assembly and the baseboard 4 can be taken out from the concave region 200 together, and the baseboard 4 can prevent the ingredients from dropping off from the openings at lower ends of the plurality of peripheral storage bins 814.

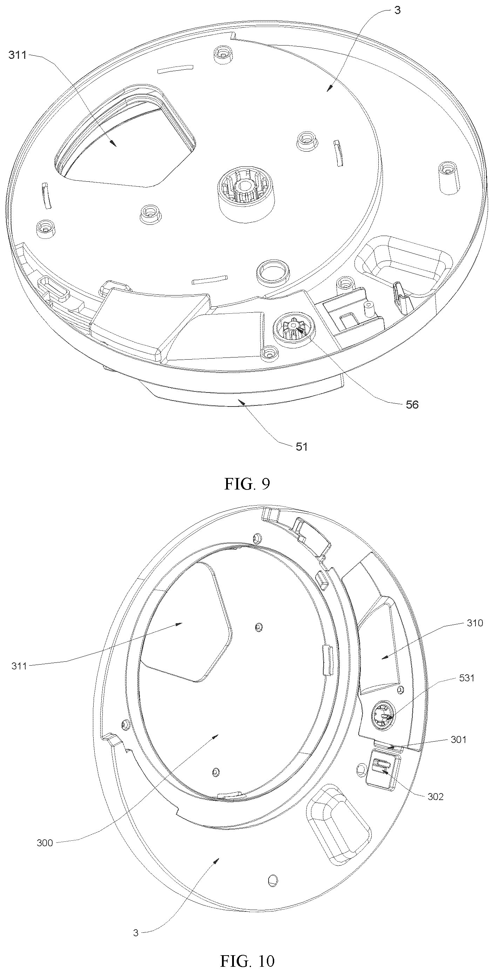

Referring to FIG. 6, FIG. 7, FIG. 8, FIG. 9 and FIG. 11, the driving assembly includes an electric box 51, a motor 52, a deceleration gear set 53 and a transmission gear set 55; the electric box 51 is disposed in the driving assembly assembling region 310 and fit with the driving assembly assembling region 310; the motor 52 and the transmission gear set 55 are disposed in the electric box 51; the transmission gear set 55 is driven by the motor 52, the transmission gear set 55 includes an output gear 56, the output gear 56 extends out of the electric box 51; the deceleration gear set 53 is disposed in a chamber 100 defined by the lower housing 3 and the upper housing 2, the deceleration gear set 53 is in transmission connection with the output gear 56. The deceleration gear set 53 includes an output gear 56 sleeved by and connected to the second gear sleeve 531, the second gear sleeve 531 is a power output end of the deceleration gear set 53. The coupling assembly is driven by the deceleration gear set 53. The integral structure is simple and the space is saved. It is convenient to lower a rotate speed of the second assembly and increase the torque, so as to assemble a motor 52 having a less power. In addition, the feeding device operates smoothly. A lower end of the coupling assembly extends into the chamber 100, and is in transmission connection with the deceleration gear set 53, so that the space is saved, and it is convenient for assembly. The motor 52 of the driving assembly is electrically connected to the control unit, and configured for driving the second assembly to rotate.

Referring to FIG. 7, FIG. 8 and FIG. 10, a sliding key 511 configured for latching the electric box 51 is connected in the chamber 100 and slidable in the chamber 100, the sliding key 511 includes an operating plate 5111 and a first latching plate 5112; the lower housing 3 is provided with a first hole 301 and a second hole 302, the first hole 301 is located at a side of the driving assembly assembling region 310, the first latching plate 5112 extends from the first hole 301 to the driving assembly assembling region 310, the operating plate 5111 extends out from a bottom of the lower housing 3, a second latching plate 512 protrudes out from an outer surface of the electric box 51, and the second latching plate 512 is latched to an outer surface of the first latching plate 5112 and configured for latching the electric box 51 and fixing the electric box 51 in the driving assembly assembling region 310. When pushing the operating plate 511, the first latching plate 5112 can be retracted to release latching to the second latching plate 512. After the latching of the second latching plate 512 is released, it is easy to take out the electric box 51 from the driving assembly assembling region 310.

Referring to FIG. 5, FIG. 6 and FIG. 14, the coupling assembly includes a first gear sleeve 57 and a connecting gear 58. The first gear sleeve 57 is integrally fixed to a lower surface of the end cap 93, and a lower end of the rotary knob 94 is located in the first gear sleeve 57. The connecting gear 58 extends up through the axle hole. When the second assembly is disposed in the concave region 200, the connecting gear 58 is inserted into the first gear sleeve 57; and the connecting gear 58 is in transmission connection with the driving assembly. As a power output end of the deceleration gear set 53, the connecting gear 58 is detachably engaged with the first gear sleeve 57. The integral structure is simple and logical, and it is convenient to detach the second assembly.

Referring to FIG. 1, FIG. 7 and FIG. 11, the second end 54 of the electric connector is fixed to a lower surface of the electric box 51, the second end 54 of the electric connector includes a horizontally extending latch 541 , the first end 112 of the electric connector includes a socket 121 fitting with the latch 541. In a process of assembling the feeding device 02, the first end 112 of the electric connector and the second end 54 of the electric connector are staggered firstly and assembled on the cooking vessel 01, and then the first end 112 of the electric connector is connected to the second end 54 of the electric connector by means of rotating 02.

Referring to FIG. 4, FIG. 6 and FIG. 11, the rotation recognition assembly includes a first transmission member 61, a pushing rod 63, a reset spring 65, a second transmission member 64, a contact switch 62 and contact protrusions 931 corresponding to the peripheral ingredient storage bins 814. The contact protrusions 931 are circumferentially fixed to the lower surface of the end cap 93. The contact protrusion 931 are circumferentially fixed to the lower surface of the end cap 93. The first transmission member 61 is vertically connected to the upper housing 2 and slidable to the upper housing 2. The first transmission member 61 is provided with a first surface matching with the contact protrusion 931. The pushing rod 63 is connected in the chamber 100 and horizontally slidably in the chamber 100. One end of the pushing rod 63 is located below the first transmission member 61, and the other end of the pushing rod 63 horizontally extends through the lower housing 3 and enters the driving assembly assembling region 310 and abuts against an opening of a guiding hole. An oblique plane is disposed at a position of the pushing rod 63 below the first transmission member 61. The reset spring 65 is connected between the pushing rod 63 and the upper housing 2, and configured for restoring the pushing rod 63. The contact switch 62 of the rotation recognition assembly is electrically connected to the control unit, and configured for recognizing a rotation position of the second assembly.

The contact switch 62 is fixed in the electric box 51, the second transmission member 64 is assembled in the electric box 51 and slidable in the electric box 51, and the second transmission member 64 is provided with a pit matching with a key of the contact switch 62. The contact switch 62 is fixed to a side of the second transmission member 64, the contact switch 62 in in electrical connection with control unit. The electric box 51 is provided with a guide hole. One end of the second transmission member 64 is connected in the guide hole and slidable in the guide hole. When the contact protrusion 931 passes the first transmission member 61, the first transmission member 61 is pressed down. When the first transmission member 61 is pressed down, the oblique plane of the pushing rod 63 make the pushing rod 63 move horizontally, so as to push the second transmission member 64, thereby making a position of the pit of the second transmission member 64 displace. Thus, the key of the contact switch 62 is pressed down by the second transmission member 64, and the contact switch 62 sends this signal to the control unit. When the contact protrusion 931 moves away from the first transmission member 61, the reset spring 65 pushes the pushing rod 63, the first transmission member 61 and the second transmission member 64 to restore.

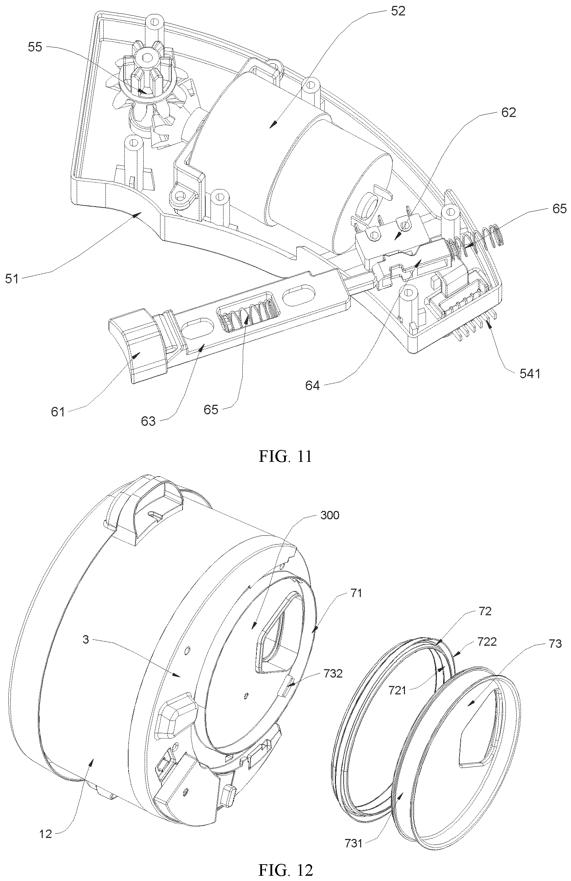

Referring to FIG. 12, the sealing assembly 7 includes a connecting ring 71, a circular-shaped gum ring 72 and a bottom cap 73. The connecting ring 71 is integrally fixed in the gum ring assembling region 300 of the lower housing 3. The first assembly and the second assembly are in an circular-shaped structure. The connecting ring 71 and the second assembly are eccentrically disposed. A fastener 732 is disposed on an inner surface of the connecting ring 71. A rim of the bottom cap 73 is provided with a circular-shaped assembling groove 731 configured for assembling the circular-shaped gum ring 72. The circular-shaped gum ring 72 includes a connecting portion 721 and a sealing portion 722 integrally fixed to the connecting portion 721. The connecting portion 721 is assembled in the circular-shaped assembling groove 731 and fits with the circular-shaped assembling groove. The bottom cap 73 is fixed in the connecting ring 71 and connected to the connecting ring 71 via the fastener 732. The connecting portion 721 is located in a silt between the connecting ring 71 and the bottom cap 73, and the sealing portion 722 extends downwards and outwards from the slit between the connecting ring 71 and the bottom cap 73.

A plurality of ingredient storage bins are disposed along an upper circumference of the second assembly. When the second assembly rotates on the first assembly, openings at the lower end of the plurality of ingredient storage bins are in communication with the discharge port 21 sequentially. Thus, different ingredients can be placed in different ingredient storage bins. The different ingredients can be sequentially fed from the discharge port 21 when the second assembly rotates. Thus, the different ingredients can be fed in stages. **In** addition, the different ingredients can be fed in stages merely by rotating the second assembly, and the integral structure of the feeding device is simple and logical. Referring to FIG. 13, the plurality of ingredient storage bins are disposed on the main body 8. The plurality of ingredient storage bins includes a center ingredient storage bin 813 and a plurality of peripheral ingredient storage bins 814 disposed evenly around the center ingredient storage bin 813, the plurality of peripheral ingredient storage bins 814 are a through hole-shaped structure extending through up and down, a bottom of the center ingredient storage bin 813 is sealed, the center ingredient storage bin 813 is in communication with at least one of the plurality of peripheral ingredient storage bins 814; and when the second assembly rotates on the first assembly, the plurality of peripheral ingredient storage bins 814 sequentially pass above the discharge port 21. Since a great amount of water is required in the process of cooking food, the center ingredient storage bin 813 and the peripheral ingredient storage bin 814 being in communication with the center ingredient storage bin are mainly configured for storing and feeding water, so as to feed water except for feeding the ingredients. An utility rate of space is high.

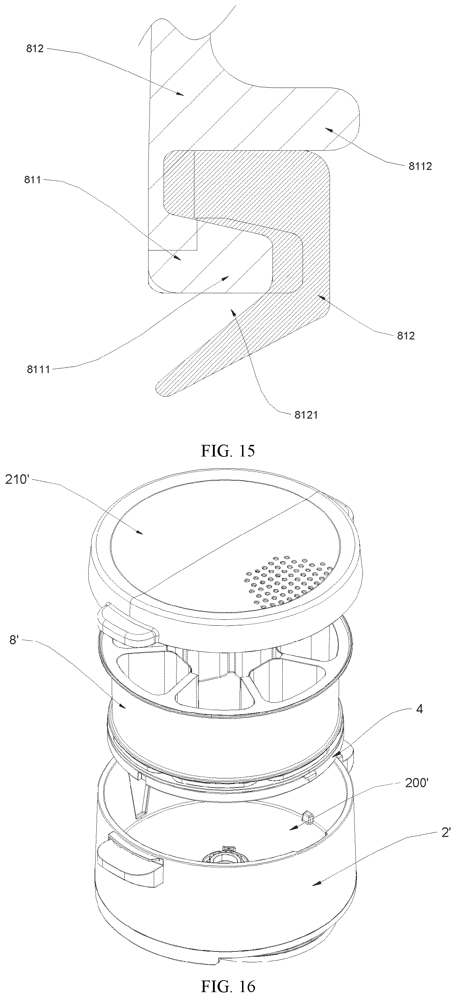

Referring to FIG. 15, lower ends of the plurality of peripheral ingredient storage bins 814 are provided with a plurality of thin-wall bin ports 811 extending downward, lower ends of the thin-wall bin ports 811 are provided with a plurality of rubber rings 812; lower ends of the plurality of thin-wall bin ports 811 are provided with a plurality of latching protrusions 8111 protruding outwards; an inner wall of each of the plurality of rubber rings 812 are provided with a plurality of latching grooves 8121 fitting with the plurality of latching protrusions 8111, and the plurality of latching protrusions 8111 are inserted into the plurality of latching grooves 8121. The rubber ring 812 can prevent mixing of the ingredients before being fed caused by leakage of the ingredients from a slit between the bottoms of the ingredient storage bins and the first assembly. Outer surfaces of the plurality of thin-wall bin ports 811 are provided with a plurality of abutting surfaces 8112, and the plurality of abutting surfaces 8112 abut against top portions of the plurality of rubber rings 812. Thus, situations that the rubber ring is jacked up can be avoided. A part of a cross section of each of the plurality of rubber rings 812 below each of the plurality of latching protrusions 8111 inclines inward along a direction from top to bottom and a thickness of the part of the cross section of each of the plurality of rubber rings 812 below each of the plurality of latching protrusions 8111 gradually decreases along the direction from top to bottom. Thus, a slit between the bottom of the ingredient storage bin and the first assembly is sealed, and rolling up of the rubber ring 812 under a force of friction of the first assembly can be avoided.

Referring to FIG. 4, FIG. 13 and FIG. 14, the latching assembly 9 is fixed to the bottom of the main body 8. The latching assembly 9 includes a tube-shaped structure 91 extending downward from the bottom of the main body 8. The latching assembly 9 is integral cylinder-shaped, and the connecting hole 43 is a circular-shaped hole. The latching assembly 9 includes a plurality of bolts 92, the plurality of bolts 92 are controllably extended from a sidewall of the latching assembly 9, the latching assembly 9 extends through the connecting hole 43 and fits with the connecting hole 43, and when the plurality of bolts 92 extend through the sidewall of the latching assembly 9, the plurality of bolts 92 abuts against a lower surface of the baseboard 4 and fits with the lower surface of the baseboard 4. The latching assembly 9 is configured for making the baseboard 4 be in tight contact with the second assembly, so as to prevent the ingredients from mixing before being fed or leaking from a slit between the second assembly and the baseboard caused by insufficient attaching between the second assembly and the baseboard.

The latching assembly 9 further includes an end cap 93, a rotary knob 94 and a cam 95. The end cap is fixed to a lower surface of the main body 8. At least one of the lower surface of the main body 8 and an upper surface of the end cap 93 extends towards the other of the lower surface of the main body 8 and the upper surface of the end cap 93 and defines a rim, so that an assembling chamber 900 is defined between the end cap 93 and the lower surface of the main body 8; the cam 95 is disposed in the assembling chamber 900 and capable of rotating in the assembling chamber 900; an inner surface of the end cap 93 or the lower surface of the main body 8 is provided with a guide rail 96, the plurality of bolts 92 are disposed on the guide rail 96 and slidable on the guide rail 96; inner ends of the plurality of bolts 92 abut against the cam 95, outer ends of the plurality of bolts 92 extend out of the assembling chamber 900, the ends of the plurality of bolts 92 extend out of the assembling chamber 900 are provided with oblique planes, and the rotary knob 94 is rotatably connected to the end cap 93, an upper end of the rotary knob 94 is coaxially fixed on the cam 95, and the lower end of the rotary knob 94 extends out of the assembling chamber 900.

The cam 95 is driven to rotate by rotation of the rotary knob 94, and the plurality of bolts 92 are driven to extend out and abut against the lower surface of the baseboard 4 by the cam 95, so that the baseboard 4 and the second assembly are tightened with each other. The integral structure of the feeding device is simple, and it is convenient to use. The cam 95 is provided with a plurality of inclined holes 951 around a rotation center of the cam 95, the plurality of inclined holes 951 are straight-shaped slot holes or curve-shaped slot holes, each of the plurality of inclined holes 951 gradually extends out from the rotation center of the cam 95 while rotationally extending along a circumference of the rotation center of the cam 95, a plurality of guide rods 921 fitting with the inclined hole are disposed in the plurality of bolts 92, and the plurality of guide rods 921 extend along a direction perpendicular to the plurality of bolts 92, and the plurality of guide rods 921 are disposed in the inclined holes 951 and slidable in the inclined holes 951. When the cam 95 rotates, the guide rod 921 is driven by both the inclined hole 951 and the guide rail 96 to extend or retract. The integral structure of the feeding device is simple without a spring, and it is convenient to use.

A feeding method of the feeding device 02 of the multifunctional chef kitchen machine includes following steps:
step S1, obtaining a choice of the recipe of a user with the interaction unit;
step S2, reminding the user to put an ingredient into a corresponding peripheral ingredient storage bin 814 with the interaction unit, and reminding the user to put water into the center ingredient storage bin 813 with the interaction unit;
step S3, the driving assembly driving the second assembly to rotate along a first direction for feeding a part of the ingredients under controlled by the control unit;
step S4, the driving assembly driving the second assembly to rotate along a second direction for feeding water under controlled by the control unit;
step S5, controlling the driving assembly driving the second assembly to rotate along the first direction again for continuously feeding the ingredients with the control unit under controlled by the control unit; and
step S6, the driving assembly driving the second assembly to rotate along the second direction to feed water again with the control unit under controlled by the control unit.

It is merely necessary for the user to select a recipe by the interaction unit, the feeding device will feed the ingredients according to a corresponding feeding parameter of the recipe. Water can be added at any time during the process of feeding the ingredients.

Each time the second assembly rotates to a position that an opening at a lower end of one of the plurality of ingredients storage bins is in communication with an upper end of the discharge port 21, the rotation recognition assembly is capable of sending a feedback signal to the control unit, and the control unit is capable of estimating a cooking process according to the feedback signal. The control unit is capable of recognizing a feeding process, and the feedback signal make the controlling of the control unit more accurately. Each time the second assembly rotates to a position that an opening at a lower end of one of the plurality of ingredients storage bins is in communication with an upper end of the discharge port 21, the rotation recognition assembly is capable of sending a feedback signal to the control unit, and the control unit is capable of sending a braking command to the driving assembly. After the driving assembly is braked, it is more convenient to feed the ingredients; in addition, in a process of feeding the liquid, it is more convenient to calculate a feeding amount of the liquid according to a time that the opening at the lower end of one of the plurality of ingredients storage bins is in communication with the upper end of the discharge port 21.

### Second embodiment

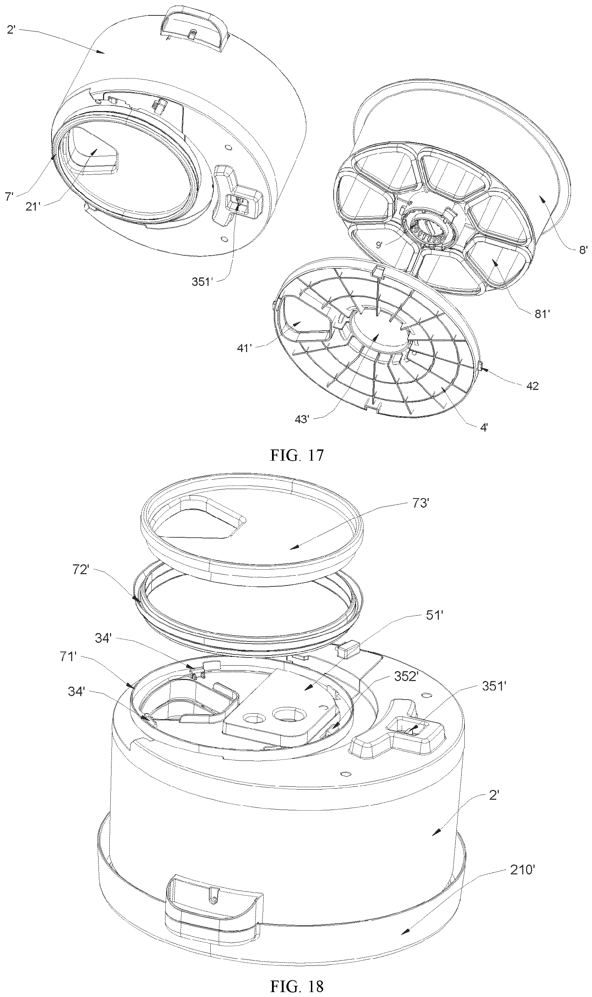

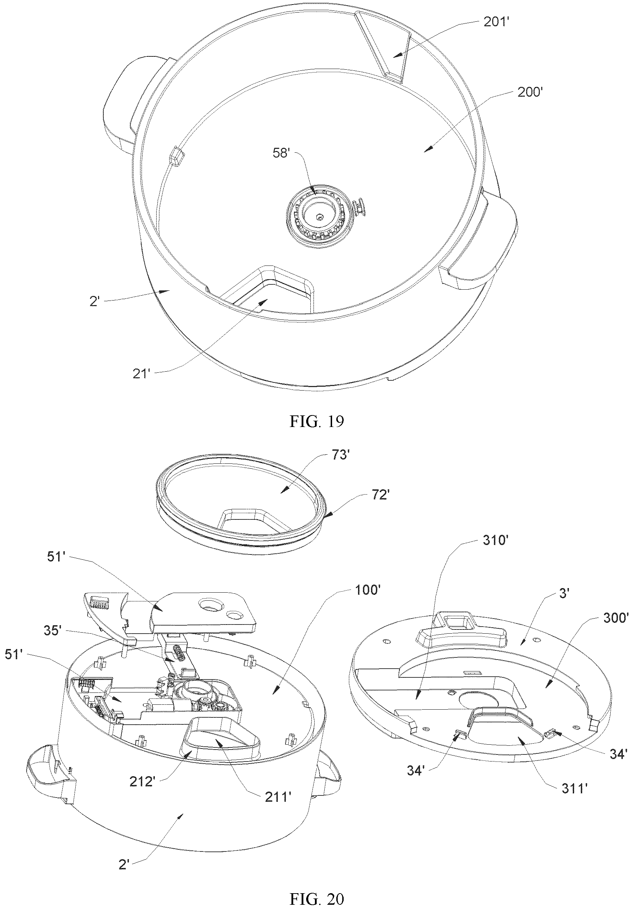

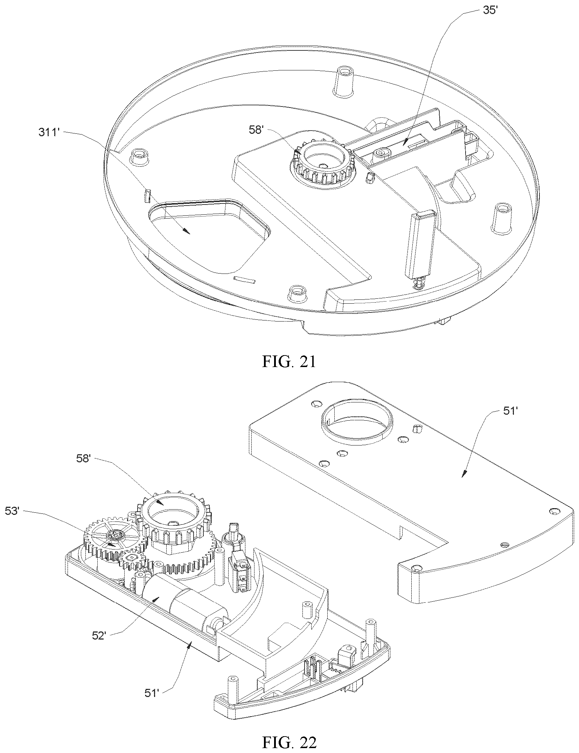

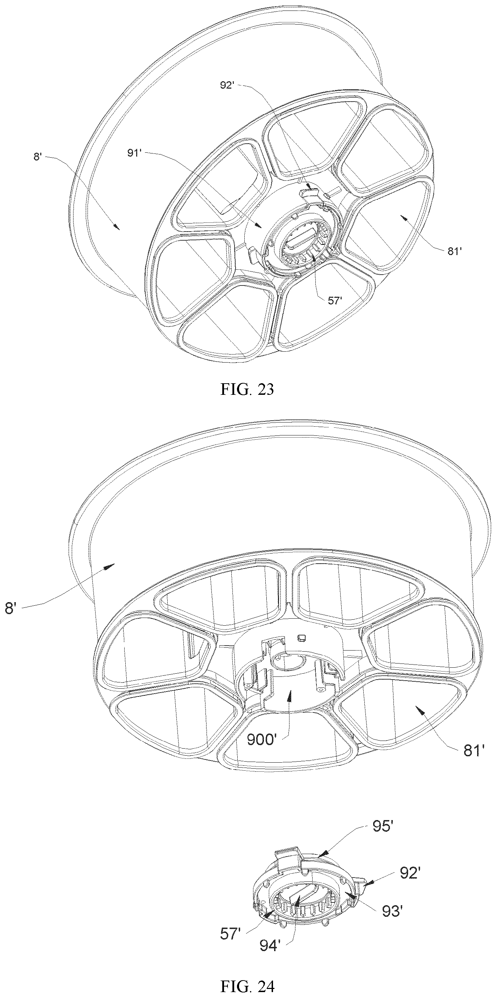

Referring to FIG. 16 to FIG. 25, the present disclosure further provides a feeding device, which includes a first assembly and a second assembly rotationally connected to the first assembly. The first assembly includes an upper housing 2', a lower housing 3', a baseboard 4', a driving assembly, a sealing assembly 7' and an end cap 210'. The second assembly includes a main body 8' and a latching assembly 9'.

A concave region 200' is defined by an upper surface of the upper housing 2' depressing and configured for accommodating the baseboard 4'. The upper housing 2 is provided with a first outlet hole 211' and an axle hole.

The lower housing 3' is fixed below the upper housing 2', and a chamber 100' is defined between the lower housing 3' and the upper housing 2'. A lower surface of the second assembly is incurved to define a gum ring assembling region 300', specially, lower surface of the lower housing 3' is incurved to define a gum ring assembling region 300'.

A lower surface of the first assembly is provided with a driving assembly assembling region 310' incurved upward. Specifically, a lower surface of the lower housing 3' is provided with a driving assembly assembling region 310' incurved upward. The driving assembly assembling region 310' is a quadrangle-shaped concave region, the gum ring assembling region 300' is a circular-shaped concave region, a depth of the driving assembly assembling region 310' is greater than a depth of the gum ring assembling region 300'.

The lower housing 3' is provided with a second outlet hole 311', the second outlet hole 311' is located in the gum ring assembling region 300'. The second outlet hole 311' and the first outlet hole 211' define the discharge port 21'. At least one of the second outlet hole 311' and the first outlet hole 211' extends towards the other one of the second outlet hole 311' and the first outlet hole 211' and defines a tube-shaped structure 212'. In addition, the discharge port 21' and the chamber 100' are sealed.

Baseboard 4': the baseboard 4' is detachably assembled in the concave region 200'. The baseboard 4' is detachably connected to a bottom of the second assembly. Specifically, the baseboard 4' is assembled below the main body, and configured for sealing an opening at a lower end of the ingredient storage bin 81'. The baseboard 4' is provided with a discharge hole 41' directly opposite to the discharge port 21'. When the ingredients are put into the plurality of ingredient storage bins 81', the second assembly and the baseboard 4' can be taken out from the concave region 200' together, and the baseboard 4' can prevent the ingredients from dropping off from the openings at lower ends of the plurality of storage bins 814'.

A restricting structure is disposed between the baseboard 4' and the upper housing 2', and the restricting structure is configured for restricting rotation of the baseboard 4' relative to the upper housing 2'; the restricting structure includes a longitudinal restricting groove 201' disposed on an inner surface of the concave region 200' and a restricting plate 42' disposed on the baseboard 4' and fit with the longitudinal restricting groove 201'; and when the baseboard 4' is disposed in the concave region 200', the restricting plate 42' is located in the longitudinal restricting groove 201' and the first discharge hole 41' is located right above the discharge port 21'. The longitudinal restricting groove 201' is a V-shaped groove longitudinally disposed, and is capable of preventing the baseboard 4' from rotating along with the second assembly under the action of a force of friction while the second assembly rotating. A center of the baseboard 4' is provided with a connecting hole 43'.

A driving assembly configured for driving the second assembly to rotate. The driving assembly includes an electric box 51', a motor 52' and a deceleration gear set 53'; the electric box 51' is fixed in the driving assembly assembling region 310'; the motor 52' and the deceleration gear set 53' are disposed in the electric box 51'; and the deceleration gear set 53' is driven by the motor 52', and the coupling assembly is driven by the deceleration gear set 53'. It is convenient to lower a rotate speed of the second assembly and increase the torque, so as to assemble a motor 52' having a less power. In addition, the feeding device operates smoothly, and the space and the cost are saved

The second assembly is in transmission connection with the driving assembly via the coupling assembly. The coupling assembly includes a first gear sleeve 57' and a connecting gear 58'. The gear sleeve 57' is integrally fixed to a lower surface of the end cap 93, and a lower end of the rotary knob 94 is located in the gear sleeve 57'. An axle hole is provided in the center of the upper housing 2'. The connecting gear 58' extends up through the axle hole. The connecting gear 58' is in transmission connection with the deceleration gear set 53. When the second assembly is disposed in the concave region 200', the connecting gear 58' is inserted into the gear sleeve 57'; and the connecting gear 58' is in transmission connection with the driving assembly. The integral structure is simple and logical, and it is convenient to detach the second assembly.

The driving assembly is disposed in the driving assembly assembling region 310'. Specifically, the electric box 51' is disposed in the driving assembly assembling region 310' and fits with the driving assembly assembling region 310'. A lower end of the coupling assembly is inserted into the driving assembly assembling region 310' and is in transmission connection with the driving assembly. More specifically, the connecting gear 58' extends downwards, penetrates through the upper housing 2' and the electric box 51' and enters the electric box 51' to be in transmission connection with the driving assembly. The integral structure of the feeding device is simple and logical, and it is convenient to assemble and change the components of the feeding device. The electric box 51' is also provided with a concave region fitting with the gum ring assembling region 300'.

The sealing assembly 7' includes a connecting ring 71' and a circular-shaped gum ring 72' detachably disposed on the connecting ring 71', the connecting ring 71' is provided with a latching surface fitting with a fixed hook 34' and a movable hook 35', and the movable hook 35' and the fixed hook 34' are latched to the latching surface. The sealing assembly 7' further includes a latching cap 73'. The latching cap 73' is latched with the connecting ring 71' and configured for fixing the circular-shaped gum ring 72' between the latching cap 73' and the connecting ring 71'. The integral structure of the multifunctional chef kitchen machine is simple and logical, and it is convenient to produce and assemble the feeding device. The sealing member is assembled in the gum ring assembling region 300. The sealing assembly 7' extends downwards, fits with an opening of the cooking vessel 1' and is inserted into the cooking vessel 1' through the opening of the cooking vessel 1'.

The gum ring assembling region 300 is provided with a fixed hook 34' and a movable hook 35', the fixed hook 34' and the movable hook 35' are circumferentially disposed, so that the sealing assembly 7' is latched in the gum ring assembling region 300'; the lower housing 3' is provided with a first hole and a second hole, the movable hook 35' is disposed in a chamber 100' defined by the lower housing 3' and the upper housing 2'. The movable hook 35' is elastically connected to the lower housing 3'; the movable hook 35' is provided with a pushing plate 351' and a hook plate 352', the pushing plate 351' extends downwards from the second hole, and the latching plate 352' extends downwards from the first hole; and the hook plate 352' and the fixed hook 34' are circumferentially disposed. The user can make the hook plate 352' no longer latched to the sealing assembly 7' by sliding the hook plate 351', and it is more convenient to disassemble and wash the feeding device.

A latching assembly 9': the latching assembly 9' is fixed to the bottom of the main body 8'. The latching assembly 9' includes a tube-shaped structure 91' extending downward from the bottom of the main body 8'. The latching assembly 9' is integral cylinder-shaped. The latching assembly 9' includes a plurality of bolts 92', the plurality of bolts 92' are controllably extended from a sidewall of the latching assembly 9', the latching assembly 9' extends through the connecting hole 43' and fits with the connecting hole 43', and when the plurality of bolts 92' extend through the sidewall of the latching assembly 9', the plurality of bolts 92' abuts against a lower surface of the baseboard 4' and fits with the lower surface of the baseboard 4'. The tube-shaped structure 91' is integral cylinder-shaped, and the connecting hole 43' is a circular-shaped hole. The latching assembly 9' is configured for making the baseboard 4' be in tight contact with the second assembly, so as to prevent the ingredients in the ingredient storage bin 81' from mixing before being fed or leaking from a slit between the second assembly and the baseboard caused by insufficient attaching between the second assembly and the baseboard.

The latching assembly 9' further includes an end cap 93', a rotary knob 94' and a cam 95'. The end cap 93' is fixed to a lower surface of the main body 8'. At least one of the lower surface of the main body 8' and an upper surface of the end cap 93' extends towards the other of the lower surface of the main body 8' and the upper surface of the end cap 93' and defines a rim, so that an assembling chamber 900' is defined between the end cap 93' and the lower surface of the main body 8'; the cam 95' is disposed in the assembling chamber 900' and capable of rotating in the assembling chamber 900'; an inner surface of the end cap 93' or the lower surface of the main body 8' is provided with a guide rail 96', the plurality of bolts 92' are disposed on the guide rail 96' and slidable on the guide rail 96'; inner ends of the plurality of bolts 92' abut against the cam 95', outer ends of the plurality of bolts 92' extend out of the assembling chamber 900', the ends of the plurality of bolts 92' extend out of the assembling chamber 900' are provided with oblique planes, and the rotary knob 94' is rotatably connected to the end cap 93', an upper end of the rotary knob 94' is coaxially fixed on the cam 95', and the lower end of the rotary knob 94' extends out of the assembling chamber 900'.

The cam 95' is driven to rotate by rotation of the rotary knob 94', and the plurality of bolts 92' are driven to extend out and abut against the lower surface of the baseboard 4' by the cam 95', so that the baseboard 4' and the second assembly are tightened with each other. The integral structure of the feeding device is simple, and it is convenient to use. The cam 95' is provided with a plurality of inclined holes 951' around a rotation center of the cam 95', the plurality of inclined holes 951' are straight-shaped slot holes or curve-shaped slot holes, each of the plurality of inclined holes 951' gradually extends out from the rotation center of the cam 95' while rotationally extending along a circumference of the rotation center of the cam 95', a plurality of guide rods 921' fitting with the inclined hole are disposed in the plurality of bolts 92', and the plurality of guide rods 921' extend along a direction perpendicular to the plurality of bolts 92', and the plurality of guide rods 921' are disposed in the inclined holes 951' and slidable in the inclined holes 951'. When the cam 95' rotates, the guide rod 921' is driven by both the inclined hole 951' and the guide rail 96' to extend or retract. The integral structure of the feeding device is simple without a spring, and it is convenient to use.

### Third embodiment

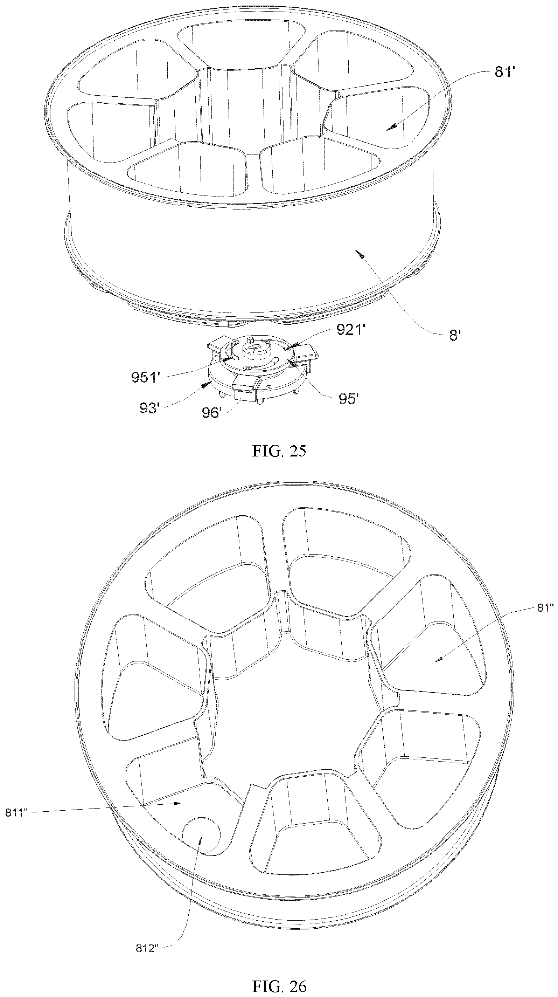

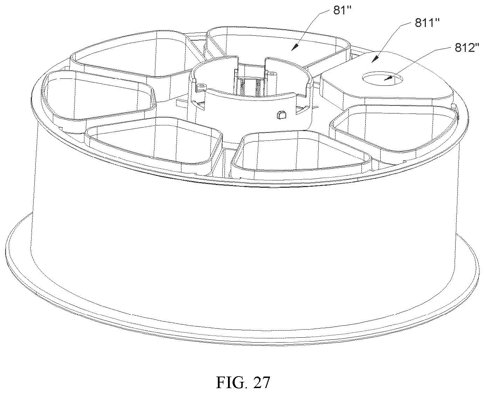

Referring to FIG. 26 and FIG. 27, the present disclosure provides a feeding device, which includes a first assembly and a second assembly rotationally connected to the first assembly. A plurality of ingredient storage bins 81" are disposed along a circumference of the second assembly, openings are provided at lower ends of the plurality of ingredient storage bins 81", and the first assembly is provided with a discharge port. When the second assembly rotates on the first assembly, the plurality of ingredient storage bins 81" are in communication with the discharge port sequentially. At least one of the plurality of ingredient storage bins 81" is provided with a restricting plate 811" at the bottom, and the restricting plate 811" is provided with a water outlet 812". The water outlet 812" is a circular-shaped hole, and a cross sectional area of the water outlet 812" is smaller than an area of the ingredient storage bin 81". Since the water outlet 812" is small and circular-shaped, it is easier to seal the liquid outlet, so that leakage of a liquid from a slit between the bottom of the ingredient storage bin 81" and the first assembly is prevented.

## Claims

1. A feeding device, **characterized by** comprising a first assembly and a second assembly rotatably connected to the first assembly, wherein a plurality of ingredient storage bins are disposed along a circumference of the second assembly, the first assembly is provided with a discharge port, and when the second assembly rotates on the first assembly, the plurality of ingredient storage bins are in communication with the discharge port sequentially.

2. The feeding device of claim 1, wherein the first assembly comprises an upper housing, a lower housing and a baseboard, the baseboard is detachably and rotatably connected to a bottom of the second assembly, the baseboard is provided with a first discharge hole corresponding to the discharge port;
a concave region is defined by an upper surface of the upper housing depressing and configured for accommodating the baseboard, the baseboard is detachably assembled in the concave region, and
the lower housing is fixed below the upper housing.

3. The feeding device of claim 2, wherein a restricting structure is disposed between the baseboard and the upper housing, and the restricting structure is configured for restricting rotation of the baseboard relative to the upper housing;
the restricting structure comprises a longitudinal restricting groove disposed on an inner surface of the concave region and a restricting plate disposed on the baseboard and fit with the longitudinal restricting groove; and
when the baseboard is disposed in the concave region, the restricting plate is located in the longitudinal restricting groove and the discharge hole is located above the discharge port.

4. The feeding device of claim 3, wherein a center of the baseboard is provided with a connecting hole; the second assembly comprises a main body and a latching assembly fixed on a bottom of the main body, the plurality of ingredient storage bins are disposed on the main body, the latching assembly comprises a tube-shaped structure extending downward from the bottom of the main body, the latching assembly comprises a plurality of bolts, the plurality of bolts are controllably extended from a sidewall of the latching assembly, the latching assembly extends through the connecting hole and fits with the connecting hole, and when the plurality of bolts extend through the sidewall of the latching assembly, the plurality of bolts abuts against a lower surface of the baseboard and fits with the lower surface of the baseboard.

5. The feeding device of claim 4, wherein the latching assembly comprises the tube-shaped structure, an end cap, a rotary knob, a cam and the plurality of bolts;
the tube-shaped structure is fixed on a lower surface of the main body, the end cap is connected to a lower end of the tube-shaped structure, at least one of the lower surface of the main body and an upper surface of the end cap extends towards the other of the lower surface of the main body and the upper surface of the end cap and defines a rim, so that an assembling chamber is defined between the end cap and the lower surface of the main body; the cam is disposed in the assembling chamber and capable of rotating in the assembling chamber; an inner surface of the end cap or the lower surface of the main body is provided with a guide rail, the plurality of bolts are disposed on the guide rail and slidable on the guide rail; inner ends of the plurality of bolts abut against the cam, outer ends of the plurality of bolts extend out of the assembling chamber, the outer ends of the plurality of bolts extend out of the assembling chamber are provided with oblique planes, when the plurality of bolts extend out of the assembling chamber, the oblique planes abut against the lower surface of the baseboard and are configured for making the baseboard and the second assembly be tightened with each other; and
the rotary knob is rotatably connected to the end cap, an upper end of the rotary knob is coaxially fixed on the cam, and the lower end of the rotary knob extends out of the assembling chamber.

6. The feeding device of claim 5, wherein the cam is provided with a plurality of inclined holes around a rotation center of the cam, the plurality of inclined holes are straight-shaped slot holes or curve-shaped slot holes, each of the plurality of inclined holes gradually extends out from the rotation center of the cam while rotationally extending along a circumference of the rotation center of the cam, a plurality of guide rods fitting with the inclined hole are disposed in the plurality of bolts, and the plurality of guide rods extend along a direction perpendicular to the plurality of bolts, and the plurality of guide rods are disposed in the inclined holes and slidable in the inclined holes.

7. The feeding device of claim 5, wherein the first assembly is provided with a driving assembly, the second assembly is driven by the driving assembly via a coupling assembly, the coupling assembly comprises a gear sleeve and a connecting gear; the gear sleeve is integrally fixed to a lower surface of the end cap, a lower end of the rotary knob is located in the gear sleeve, the upper housing is provided with an axle hole, and the connecting gear extends through the axle hole; when the second assembly is disposed in the concave region, the connecting gear is inserted into the gear sleeve; and the connecting gear is in transmission connection with the driving assembly.

8. The feeding device of claim 5, further comprising a rotation recognition assembly, wherein the rotation recognition assembly comprises a transmission member, a contact switch and a plurality of contact protrusions corresponding to the plurality of ingredient storage bins;
the plurality of contact protrusions are circumferentially fixed to the lower surface of the end cap;
the contact switch is fixed on the first assembly; the transmission member is movably connected to the first assembly, the transmission member comprises a second surface matching with the contact switch, and the transmission member comprises a first surface matching with the contact protrusion.

9. The feeding device of claim 1, wherein openings at lower ends of the plurality of ingredient storage bins are provided with a plurality of thin-wall bin ports extending downward, lower ends of the thin-wall bin ports are provided with a plurality of rubber rings; lower ends of the plurality of thin-wall bin ports are provided with a plurality of latching protrusions protruding outwards; an inner wall of each of the plurality of rubber rings are provided with a plurality of latching grooves fitting with the plurality of latching protrusions, and the plurality of latching protrusions are inserted into the plurality of latching grooves.

10. The feeding device of claim 9, wherein outer surfaces of the plurality of thin-wall bin ports are provided with a plurality of abutting surfaces, and the plurality of abutting surfaces abut against top portions of the plurality of rubber rings.

11. The feeding device of claim 9, wherein a part of a cross section of each of the plurality of rubber rings below each of the plurality of latching protrusions inclines inward along a direction from top to bottom and a thickness of the part of the cross section of each of the plurality of rubber rings below each of the plurality of latching protrusions decreases along the direction from top to bottom.

12. The feeding device of claim 1, wherein the first assembly is provided with a driving assembly, the second assembly is driven by the driving assembly via a coupling assembly; a lower surface of the first assembly is provided with a driving assembly assembling region incurved upward.

13. The feeding device of claim 12, wherein the driving assembly is disposed in the driving assembly assembling region; and a lower end of the coupling assembly is inserted into the driving assembly assembling region and is in transmission connection with the driving assembly.

14. The feeding device of claim 13, wherein the driving assembly comprises an electric box, a motor and a deceleration gear set; the electric box is fixed in the driving assembly assembling region; the motor is disposed in the electric box; and the deceleration gear set is driven by the motor, and the coupling assembly is driven by the deceleration gear set.

15. The feeding device of claim 12, wherein the first assembly comprises an upper housing and a lower housing fixed below the upper housing, and a chamber is defined between the upper housing and the lower housing;
the driving assembly comprises an electric box, a motor, a deceleration gear set and a transmission gear set; the electric box is disposed in the driving assembly assembling region and fit with the driving assembly assembling region; the motor and the transmission gear set are disposed in the electric box; the transmission gear set is driven by the motor, the transmission gear set comprises an output gear, the output gear extends out of the electric box; the deceleration gear set is disposed in a chamber defined by the lower housing and the upper housing, the deceleration gear set is in transmission connection with the output gear; and a lower end of the coupling assembly extends into the chamber, and is in transmission connection with the deceleration gear set.

16. The feeding device of claim 15, wherein a sliding key configured for latching the electric box is connected in the chamber and slidable in the chamber, the sliding key comprises an operating plate and a first latching plate; the lower housing is provided with a first hole and a second hole, the first hole is located at a side of the driving assembly assembling region, the first latching plate extends from the first hole to the driving assembly assembling region, the operating plate extends out from a bottom of the lower housing, a second latching plate protrudes out from an outer surface of the electric box, and the second latching plate is latched to an outer surface of the first latching plate and configured for latching the electric box and fixing the electric box in the driving assembly assembling region.

17. The feeding device of claim 1, wherein at least one of the plurality of ingredient storage bins is provided with a restricting plate at the bottom, and the restricting plate is provided with a liquid outlet.

18. The feeding device of claim 1, wherein the plurality of ingredient storage bins comprises a center ingredient storage bin and a plurality of peripheral ingredient storage bins disposed evenly around the center ingredient storage bin, the plurality of peripheral ingredient storage bins are a through hole-shaped structure
a bottom of the center ingredient storage bin is sealed, the center ingredient storage bin is in communication with at least one of the plurality of peripheral ingredient storage bins; and when the second assembly rotates on the first assembly, the plurality of peripheral ingredient storage bins sequentially pass above the discharge port.

19. The feeding device of claim 18, further comprising a control unit, an interaction unit, a cloud server, a driving assembly configured for driving the second assembly to rotate, and a rotation recognition assembly configured for recognizing a rotation position of the second assembly; wherein the control unit, the interaction unit and the cloud server are in electrical communication with each other, the control unit is in electrical connection with the driving assembly and the rotation recognition assembly, respectively; and the cloud server is configured for storing a database of recipe.

20. A feeding method of the feeding device of claim 19, **characterized by** comprising step S1, obtaining a choice of the recipe of a user with the interaction unit;
step S2, reminding the user to put an ingredient into a corresponding peripheral ingredient storage bin with the interaction unit, and reminding the user to put water into the center ingredient storage bin with the interaction unit;
step S3, the driving assembly driving the second assembly to rotate along a first direction for feeding a part of the ingredients under controlled by the control unit;
step S4, the driving assembly driving the second assembly to rotate along a second directionfor feeding water under controlled by the control unit; and
step S5, controlling the driving assembly driving the second assembly to rotate along the first direction again for continuously feeding the ingredients with the control unit under controlled by the control unit.

21. The method of claim 20, wherein after step S5, the method further comprises a following step:
step S6, the driving assembly driving the second assembly to rotate along the second direction to feed water again with the control unit under controlled by the control unit.

22. The method of claim 20, wherein each time the second assembly rotates to a position that an opening at a lower end of one of the plurality of ingredients storage bins is in communication with an upper end of the discharge port, the rotation recognition assembly is capable of sending a feedback signal to the control unit, and the control unit is capable of estimating a cooking process according to the feedback signal.

23. The method of claim 20, wherein each time the second assembly rotates to a position that an opening at a lower end of one of the plurality of ingredients storage bins is in communication with an upper end of the discharge port, the rotation recognition assembly is capable of sending a feedback signal to the control unit, and the control unit is capable of sending a braking command to the driving assembly.

24. A feeding method of the feeding device of claim 18, **characterized by** comprising step S1, the second assembly rotating along a first direction for feeding a part of the ingredients;
step S2, the second assembly rotating along a second direction for feeding water; and
step S3, the second assembly rotating along the first direction again for feeding the other part of the ingredients.

25. A multifunctional chef kitchen machine, comprising a cooking vessel and a heating unit configured for heating the cooking vessel, **characterized in that** an opening of the cooking vessel is detachably connected to the feeding device of claim 5, a lower surface of the second assembly is incurved to define a gum ring assembling region, a sealing assembly is disposed in the gum ring assembling region, the sealing assembly extends downwards, fits with an opening of the cooking vessel and is inserted into the cooking vessel through the opening of the cooking vessel.

26. The multifunctional chef kitchen machine of claim 25, wherein the gum ring assembling region is provided with a fixed hook and a movable hook, the fixed hook and the movable hook are circumferentially disposed, so that the sealing assembly is latched in the gum ring assembling region; the lower housing is provided with a first hole and a second hole, the movable hook is disposed in the lower housing and slidable in the lower housing, and the movable hook is elastically connected to the lower housing; the movable hook is provided with a pushing plate and a hook plate, the pushing plate extends downwards from the second hole, and the hook plate extends downwards from the first hole; and the hook plate and the fixed hook are circumferentially disposed.

27. The multifunctional chef kitchen machine of claim 25, wherein the sealing assembly comprises a connecting ring and a circular-shaped gum ring detachably disposed on the connecting ring, the connecting ring is provided with a latching surface fitting with a fixed hook and a movable hook, and the movable hook and the fixed hook are latched to the latching surface.

28. The multifunctional chef kitchen machine of claim 25, wherein an outer surface of the cooking vessel is provided with a hollow handle, an upper end of the hollow handle is fixed to a first end of an electric connector, the first assembly is fixed to a second end of the electric connector being electrically connected to the driving assembly; and when the feeding device is disposed on the cooking vessel, the first end of the electric connector is in electrical communication with the second end of the electric connector.

29. The multifunctional chef kitchen machine of claim 28, wherein the second end of the electric connector comprises a latch horizontally extending around a circumference of the sealing assembly, the first end of the electric connector comprises a socket fitting with the latch; and the second end of the electric connector is fixed to a lower end of the electric box.
